# EUROPEAN PATENT APPLICATION

(11) **EP 4 545 973 A1**
(43) Date of publication of application: **30.04.2025**
(21) Application number: 23826754.6
(22) Date of filing: 28.03.2023
(51) Int. Cl.: G01N 35/00, G01N 35/02

(54) **AUTOMATIC ANALYSIS DEVICE AND METHOD FOR READING INFORMATION ON AUTOMATIC ANALYSIS DEVICE**

(30) Priority: 21.06.2022 JP 2022099474
(71) Applicant: HITACHI HIGH-TECH CORPORATION, Tokyo 105-6409 (JP)
(72) Inventor: DENAWA Masahide, Tokyo 105-6409 (JP); TAKEDA Naohiro, Tokyo 105-6409 (JP); KIKUCHI Satoshi, Tokyo 105-6409 (JP); NODA Kazuhiro, Tokyo 105-6409 (JP); TANOUE Hidetsugu, Tokyo 105-6409 (JP)
(74) Representative: MERH-IP Matias Erny Reichl Hoffmann Patentanwälte PartG mbB
(86) International application number: PCT/JP2023/012511
(87) International publication number: WO 2023/248565

(57) **Abstract**

To provide an automatic analyzer capable of reducing the installation area of a device more than the conventional one and a method of reading information by the above automatic analyzer.

[Means for Solution]

An automatic analyzer includes a sample disk 114 that holds a sample container 102 with a first tag 101 of storing information about a liquid to be housed attached to the outer wall thereof, a holding area 103A which is located within the sample disk 114 for setting the sample container 102 with the first tag 101 attached there, an area 105A for setting a second tag 104 of storing the information about the automatic analyzer 1, and a reader 106 whose reading range 111 includes the holding area 103A and the area 105A, which is fixed in a way possible to read the information stored in the first tag 101 and the second tag 104.

## Description

### Technical Field

The present invention relates to an automatic analyzer and an information reading method by the automatic analyzer.

### Background Art

Patent Literature 1 describes a structure that bends light from a reader by using a reflector and reads an information recording medium attached to a reagent. This method improves a packaging density while maintaining a function of identifying a reagent using a barcode.

### Citation List

### Patent Literature

Patent Literature 1: Japanese Unexamined Patent Application Publication No. 2008-157970

### Summary of Invention

### Technical Problem

According to Patent Literature 1, concise reading of two types of information, such as a sample ID and a consumables ID, is not considered.

Therefore, an object of the present invention is to provide an automatic analyzer and an information reading method by the automatic analyzer, which are capable of concisely reading a plurality of types of information.

### Solution to Problem

An automatic analyzer according to an aspect of the present invention includes a container holding unit that holds a container having, attached to its outer wall, a first tag storing information about liquid to be housed, a first tag setting position that is located within the container holding unit and where the container with the first tag attached is to be set, a second tag setting position where a second tag storing information about the automatic analyzer is to be set, and a reader whose reading range includes the first tag setting position and the second tag setting position and that is fixed so as to be capable of reading the information stored in the first tag and the second tag.

### Advantageous Effects of Invention

According to the present invention, it is possible to provide an automatic analyzer and an information reading method by the automatic analyzer, which are capable of concisely reading a plurality of types of information.

### Brief Description of Drawings

[Fig. 1] Fig. 1 is a view showing a schematic configuration of an automatic analyzer.
[Fig. 2] Fig. 2 is a view schematically showing a configuration of information reading.
[Fig. 3A] Fig. 3A is a view schematically showing one example of how to divide an image division.
[Fig. 3B] Fig. 3B is a view schematically showing one example of how to divide the image division.
[Fig. 3C] Fig. 3C is a view schematically showing one example of how to divide the image division.
[Fig. 4] Fig. 4 is a view schematically showing another example of the configuration of information reading.
[Fig. 5] Fig. 5 is a flow chart showing one example of the information reading.
[Fig. 6] Fig. 6 is a flow chart showing one example of the information reading.
[Fig. 7] Fig. 7 is a flow chart showing the processing in an area A of Fig. 6.
[Fig. 8] Fig. 8 is a view schematically showing a configuration of the information reading according to a second embodiment.
[Fig. 9] Fig. 9 is a view schematically showing a configuration of the information reading according to a third embodiment.
[Fig. 10] Fig. 10 is a view schematically showing a configuration of the information reading according to a fourth embodiment.

### Description of Embodiments

Hereinafter, embodiments of an automatic analyzer and an information reading method by the automatic analyzer will be described with reference to the drawings. In the drawings used in the present specification, identical or corresponding constituent elements are denoted by the same or similar reference signs, and repeated descriptions of these constituent elements may be omitted.

In the following embodiments, a description will be made about a case where liquid is a sample, a container to which a first tag is attached is a sample container 102 holding the sample, a container holding unit is a sample disk 114 for holding a plurality of sample containers 102, information about an automatic analyzer 1 recorded in a second tag is information about a component or a value of the automatic analyzer 1. However, it goes without saying that the embodiments are not limited thereto.

The liquid can be a reagent other than the sample. This reagent also corresponds to a system reagent or various consumables.

### First Embodiment

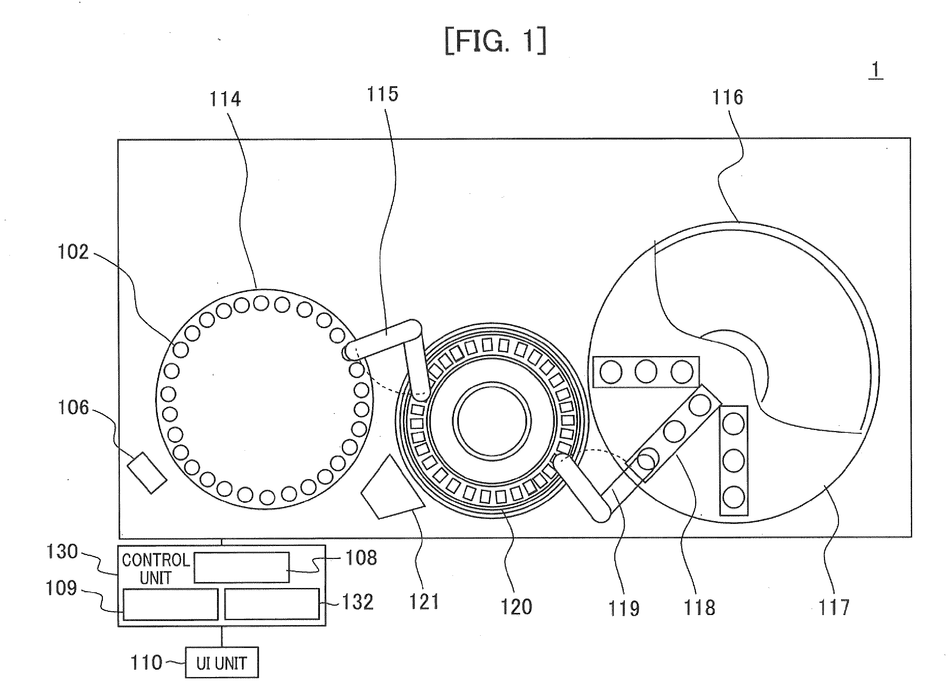

A first embodiment of the automatic analyzer and the information reading method by the automatic analyzer will be described with reference to Figs. 1 to 7.

First, an overall configuration of an automatic analyzer will be described with reference to Fig. 1. Fig. 1 is a view showing an example of a schematic configuration of the automatic analyzer.

The automatic analyzer 1 is a device for analyzing a sample using a reagent according to a predetermined analysis item, and includes the sample disk 114, a sample dispensing mechanism 115, a reagent storage 116, a reagent dispensing mechanism 119, a reaction bath 120, a biochemistry detecting unit 121, a control unit 130, a UI unit 110, and the like.

The sample disk 114 is a structure for holding sample containers 102 in an annular shape. For dispensing of a sample, the sample disk 114 rotates and conveys a sample container 102 to an access position of the sample dispensing mechanism 115.

A first tag 101 described later is attached to the sample container 102. A code reader (hereinafter referred to as a reader) 106 reads the first tag 101 and transmits information of the first tag 101 to the control unit 130.

The sample dispensing mechanism 115 includes a rotation drive mechanism, a vertical drive mechanism, and a dispensing probe, and is moved between a sample aspiration position and a sample discharge position by these mechanisms.

The reagent storage 116 is a mechanism having a cold storage function for storing a reagent pack in which a reagent is housed, and includes a reagent disk 117 and reagent pack holding units 118.

The reagent pack holding units 118 are arranged in an annular shape on the reagent disk 117 and are configured to hold a plurality of reagent packs. The reagent disk 117 includes a rotation drive mechanism and moves each of the reagent packs to a predetermined position on a circumference by rotational movement.

The reagent dispensing mechanism 119 includes a rotation drive mechanism, a vertical drive mechanism, and a dispensing probe. The reagent dispensing mechanism 119 rotates and descends to the position of a predetermined type of reagent pack on the reagent disk 117, and aspirates a predetermined amount of reagent. After the aspiration of the reagent, the reagent dispensing mechanism 119 ascends. Next, the reagent dispensing mechanism 119 rotates and descends to a predetermined reaction cell on the reaction bath 120 as a reagent discharge destination and discharges each reagent.

The reaction bath 120 is controlled to an appropriate temperature for the purpose of promoting a reaction between the sample and the reagent.

A biochemistry analysis procedure will be described below.

First, the sample dispensing mechanism 115 dispenses a predetermined amount of sample into a predetermined reaction cell on the reaction bath 120. Thereafter, the reaction bath 120 rotates and moves the reaction cell to which the sample has been discharged to an access position of the reagent dispensing mechanism 119, and the reagent dispensing mechanism 119 dispenses a predetermined amount of reagent to the reaction cell to which the sample has been discharged.

When a reaction process between the sample and the reagent on the reaction bath 120 is completed, the reaction bath 120 rotates, and a reaction cell containing a reaction solution after the reaction is completed is moved to an installation position of the biochemistry detecting unit 121.

Thereafter, a reaction signal is measured by the biochemistry detecting unit 121.

The above-described mechanisms that are included in the automatic analyzer 1 are referred to as analysis operation units.

Further, the automatic analyzer 1 includes the control unit 130 that controls an operation of each device in the automatic analyzer 1, and the UI unit 110.

The control unit 130 includes, for example, a hardware board and a computer, and has, built therein, a storage device 132 such as a hard disk, a mechanism operation control unit 108, and an analysis operation control unit 109.

A control parameter corresponding to each unit and the like are stored in the storage device 132.

The control unit 130 may be configured as hardware by a dedicated circuit board or may be configured by software executed by the computer. In a case where the control unit 130 is configured by hardware, the control unit 130 can be implemented by integrating a plurality of arithmetic units that execute processing on a wiring board or in a semiconductor chip or a package. In a case where the control unit 130 is configured by software, the control unit 130 can be implemented by installing a high-speed general-purpose CPU in the computer and executing a program that executes desired arithmetic processing. It is also possible to upgrade an existing device using a recording medium on which this program is recorded. Further, these devices, the circuit, and the computer are connected to each other via a wired or wireless network, and data is transmitted and received by these devices, the circuit, and the computer as appropriate.

The UI unit 110 includes a display device that is a display, and input devices such as a mouse and a keyboard.

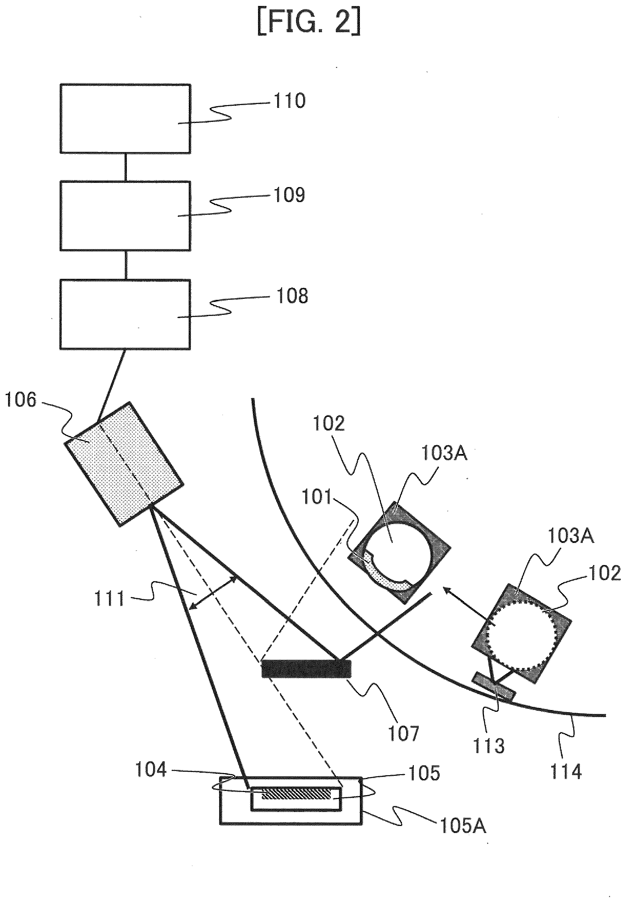

Next, a characteristic configuration in the present embodiment will be described with reference to Fig. 2 and the subsequent drawings. First, a configuration for reading information will be described with reference to Fig. 2. Fig. 2 is a view schematically showing the configuration for reading information.

As described above, the first tag 101 such as a one-dimensional code (barcode) is attached to an outer wall of the sample container 102 housing liquid such as the sample. That is, the first tag stores information about the liquid housed.

The container to which the first tag is attached is not limited to the sample container 102 housing the liquid as the sample, and may be a container housing liquid such as a reagent, for example. In addition, the first tag 101 can be a two-dimensional code as well as a one-dimensional code, and may be configured as a semiconductor storage medium, a magnetic storage medium, an optical storage medium, or the like.

The sample container 102 is fixed to one holding area 103A among a plurality of holding areas 103A located in the sample disk 114. Note that a plurality of sample container 102 may be held in the holding area 103A. The holding area 103A may be a rectangular parallelepiped piece such as a rack that can hold several containers, or a disk-shaped piece that can hold containers in a circumferential shape, and is not particularly limited.

In addition, a sensor 113 that can determine whether a container is present at the time of reading by the reader 106 may be installed. The sensor 113 can be an optical sensor or a sonic sensor for reflection, transmission, imaging, or the like, and may be at the same position as a position where reading is performed by the reader 106.

In addition, a second tag 104 such as a two-dimensional code storing information about the automatic analyzer 1 is set in an area 105A for an object 105 such as a consumable component used in the automatic analyzer 1 or a part of the configuration of the automatic analyzer 1.

Note that the second tag 104 does not need to be set on the object 105, and may be displayed on a screen using a smart device, printed on a sheet or a label, or the like. Similarly to the first tag 101, the second tag 104 can be a one-dimensional code as well as a two-dimensional code, and may be configured as a semiconductor storage medium, a magnetic storage medium, an optical storage medium, or the like.

In the present embodiment, the reader 106 that is capable of reading the information stored in the first tag 101 located in the holding area 103A and the information stored in the second tag 104 located in the area 105A is fixed to a predetermined position in the automatic analyzer 1. In addition, the reading range 111 is fixed so as to include the holding area 103A and the area 105A. Preferably, the first tag 101 and the second tag 104 can be read simultaneously.

After the reading is performed, the information of the first tag 101 and the second tag 104 is processed by the mechanism operation control unit 108 or the analysis operation control unit 109 and stored in the storage device 132, and information related to the UI unit 110 is displayed. The operation of the reader 106 is controlled by the mechanism operation control unit 108 or the analysis operation control unit 109.

In the reading range 111 of the reader 106, at least one of the holding area 103A and the area 105A can be optically directly read. In the present embodiment, the second tag 104 in the area 105A can be optically directly read, while a first optical path branching unit 107 such as a mirror is installed within the reading range 111 between the reader 106 and the holding area 103A, and a part of an optical path in the reading range 111 is bent such that the first tag 101 is read.

Note that the first optical path branching unit 107 installed within the reading range 111 can be installed at one or more locations between the reader 106 and the holding area 103A, or between the reader 106 and the area 105A, and can be located at one location between the reader 106 and the area 105A where the second tag 104 is located, or at two locations between the reader 106, and the holding area 103A and the area 105A (a form in the third embodiment, details will be described later).

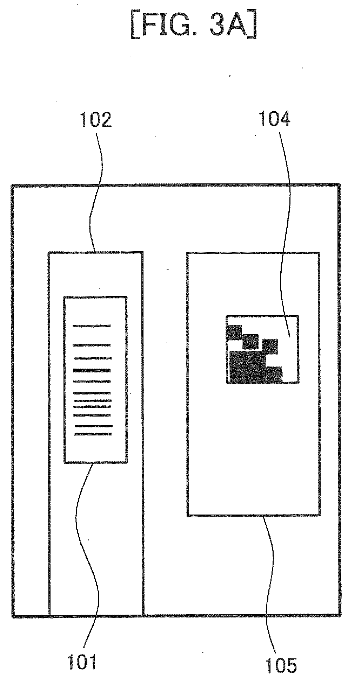

Figs. 3A to 3C are views schematically showing examples of how to divide an image into image sections at the time of imaging by the reader 106. In the present embodiment, preferably, the reader 106 is capable of simultaneously reading the information stored in the first tag 101 located in the holding area 103A and the information stored in the second tag 104 located in the area 105A. Therefore, as shown in Fig. 3A, in an image area 301 at the time of imaging, the sample container 102 to which the first tag 101 is attached and the object 105, such as a consumable, to which the second tag 104 is attached are included in the same image.

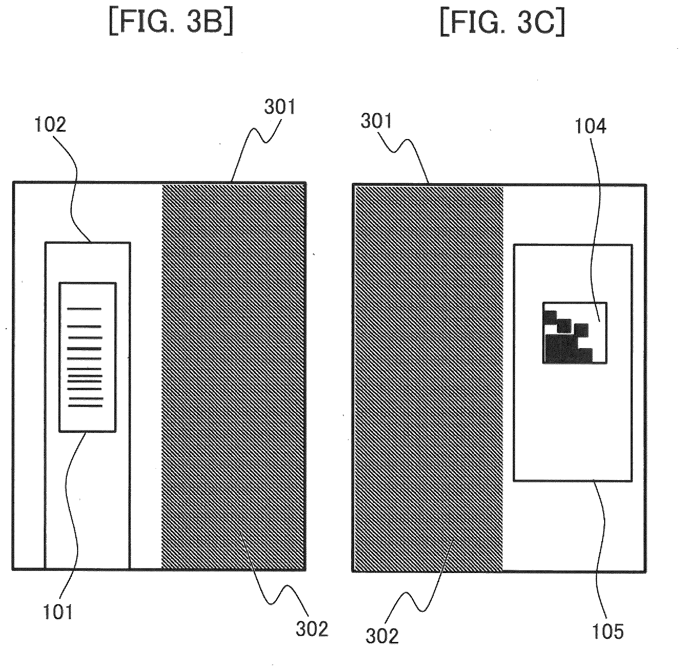

Therefore, it is desirable that the image area 301 included in the same image be divided into sections such as decoding area settings 302 on software. For example, it is desirable that the reading be performed by switching the reading area range such that processing is performed to set the area 105A side as a decoding area in a first tag information reading mode of reading the information of the first tag 101, as shown in Fig. 3B, and that processing is performed to set the holding area 103A side as a decoding area in a second tag information reading mode of reading the information of the second tag 104, as shown in Fig. 3C.

Note that the reading may be performed simultaneously without setting a decoding area.

In addition, it is desirable that the reader 106 be capable of changing reading detection setting between the first tag information reading mode of reading the information of the first tag 101 and the second tag information reading mode of reading the information of the second tag 104.

For example, in a case where the information of the first tag 101 present in the holding area 103A is read, since the reading is performed via the first optical path branching unit 107, it is possible to make adjustments such as lengthening an exposure time and increasing the amount of light, compared to a case where the information of the second tag 104 present in the area 105A is read.

It is desirable that the mode switching between the first tag information reading mode and the second tag information reading mode is performed on a screen displayed on the UI unit 110, but the switching is not limited thereto.

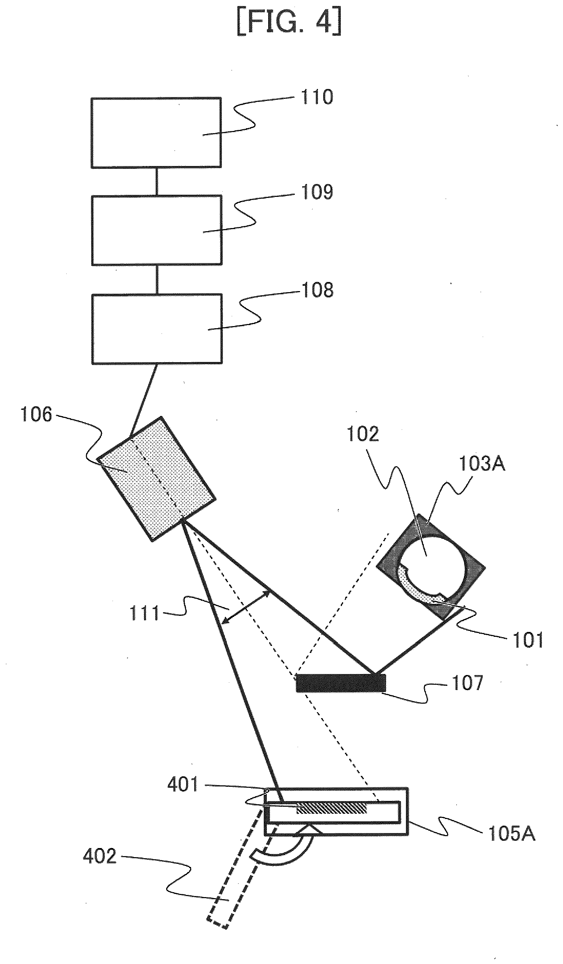

Fig. 4 is a schematic view showing an embodiment regarding a cover installed at a second tag reading position. The cover 402 is installed at an installation position of the second tag 104. The cover 402 is installed to ensure the performance and safety of the reader, and may not be provided depending on the configuration.

A cover tag 401 is attached to the cover 402 on the reader side. By reading the cover tag 401 by the reader 106 at a certain timing on the system, it is possible to confirm that the cover is closed.

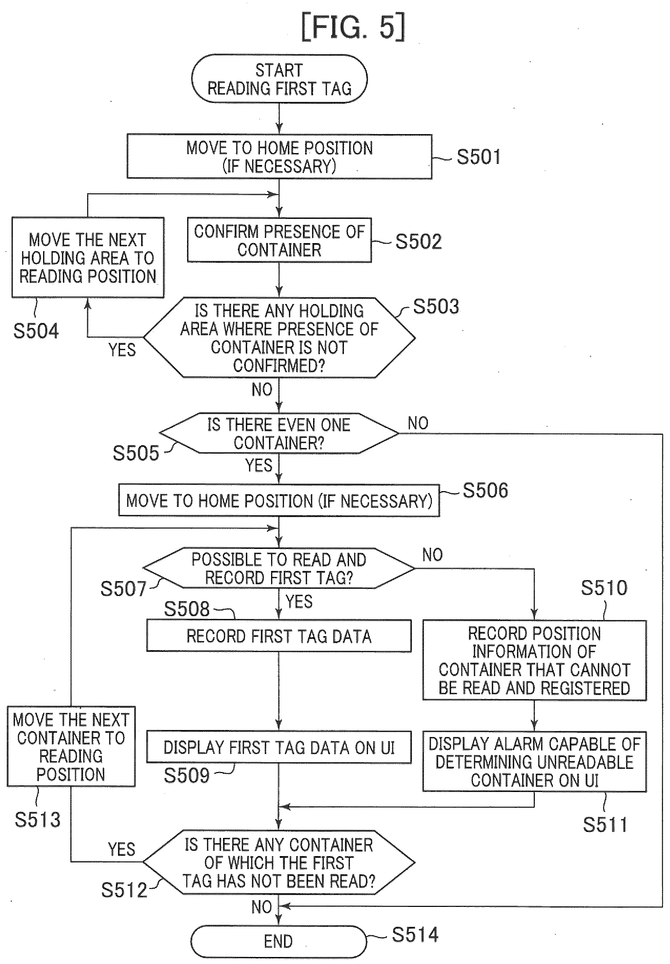

Next, a procedure of reading the first tag 101 will be described with reference to Fig. 5. Fig. 5 is a flowchart showing the procedure of reading the first tag 101. The following operation is controlled by the mechanism operation control unit 108.

When the reading of the first tag 101 is started, the sample disk 114 moves to a home position. Therefore, one of the plurality of holding areas 103A located in the sample disk 114 is moved to a position suitable for the start of the reading (S501). In this case, the home position refers to only one specific location determined for each movable mechanism. A home position is also present even for the sample disk 114. When the sample disk 114 is present at the home position, a specific one of the plurality of holding areas 103A is present at a location suitable for the start of the reading. Note that when the sample disk 114 is at the home position when the reading of the first tag 101 is started, the sample disk 114 does not move.

Next, whether or not the sample container 102 is set in the holding area 103A is determined based on a sensor result of the sensor 113 (S502). In a case where a holding area 103A for which the presence or absence of the sample container 102 has not been confirmed is present (YES in S503), the sample disk 114 moves the next holding area 103A to the reading position (S504). Whether containers are set in all of the holding areas 103A is confirmed (NO in S503), and in a case where any sample container 102 is not present on the sample disk 114 (NO in S505), the process is completed. In a case where even one sample container 102 is present (YES in S505), the sample disk 114 moves to the home position (S506), and the process proceeds to S507. In a case where the sample disk 114 is located at the home position in S505, S506 is not required.

Next, it is determined whether the first tag 101 can be read by the above-described processing in S501 to S505 and whether the information of the first tag 101 can be recorded (S507) .

In a case where it is determined that the reading is possible and that the information can be recorded, the information of the corresponding first tag 101 is associated in addition to information of a setting position where the sample container 102 is present in the holding area 103A, and recorded in the storage device 132 (S508), necessary information is displayed on the UI unit 110 (S509), and the process proceeds to S512.

On the other hand, in a case where it is determined that the reading is not possible in S507, or in a case where it is determined that the recording is not possible, information indicating a position where the sample container 102 is set in the holding area 103A is recorded in the storage device 132 (S510), an alarm indicating the sample container 102 that cannot be read is present is displayed on the UI unit 110 (S511), and the process proceeds to S512.

In a case where it is determined that a sample container 102 is present in another holding area 103A in S503, it is determined whether it is necessary to continuously read the first tag 101 of the other sample container 102 (S512). In a case where it is necessary to perform reading, after the next container is moved to a position suitable for the reading (S513), the process returns to S507 to continue the reading. In a case where it is not necessary to perform the reading, the process is completed.

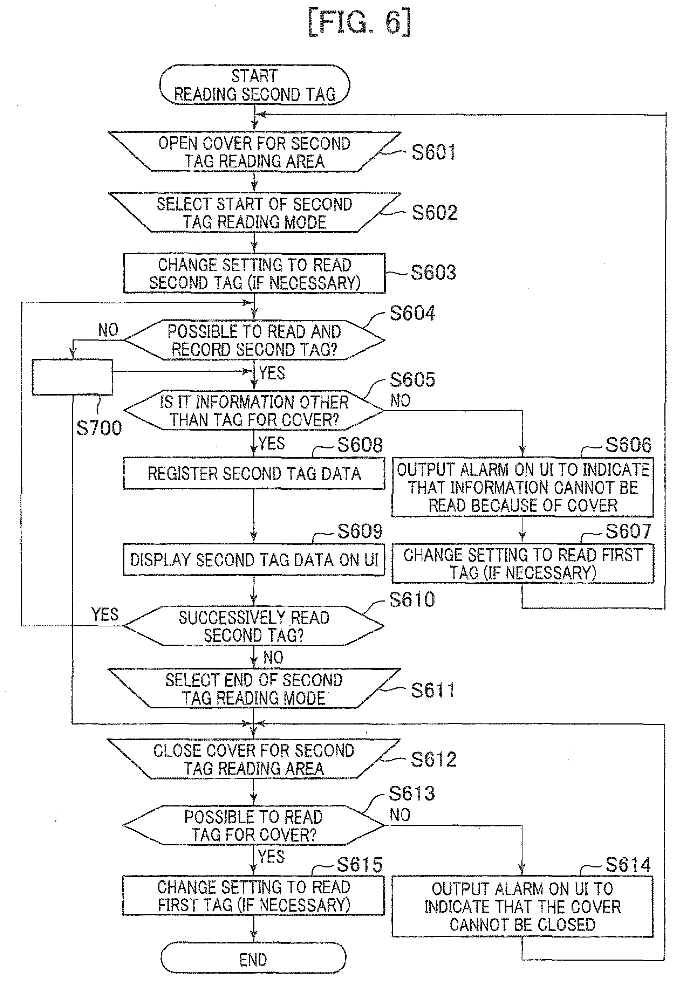

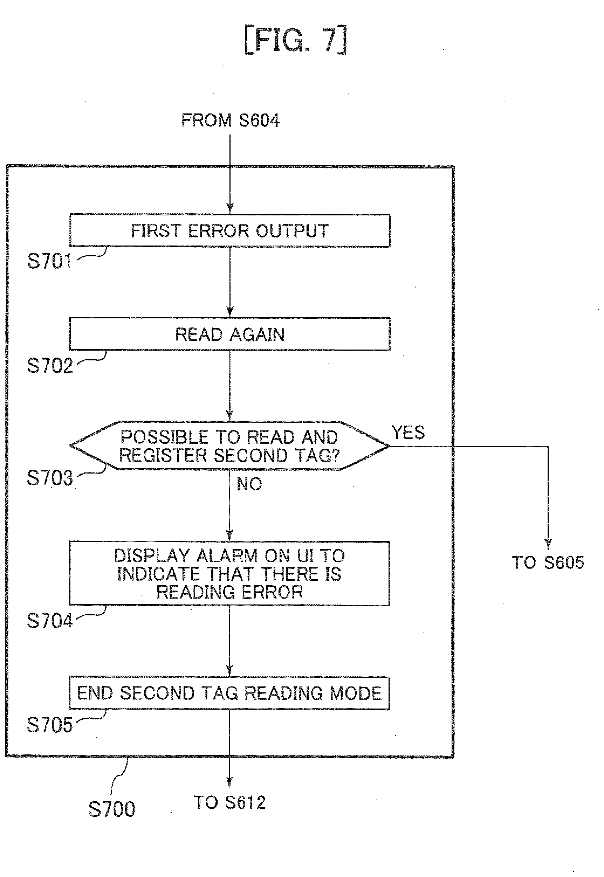

Next, a procedure of reading the second tag 104 will be described with reference to Figs. 6 and 7. Fig. 6 is a flowchart showing a procedure of reading the second tag 104. Fig. 7 is a diagram showing a part of the procedure shown in Fig. 6.

In the present embodiment, the cover 402 is provided at the second tag reading position. Therefore, as shown in Fig. 6, a user opens the cover 402 to start reading the second tag 104 (S601). In a case where the cover 402 is not provided, S601 is omitted.

Next, the user selects a mode of reading the second tag 104 from the UI unit 110 or the like (S602). Thereafter, the mechanism operation control unit 108 changes a setting for the reader 106 to a setting for reading the second tag (S603). Note that the setting for the reader 106 may not be changed and a preparation mechanism operation for reading the second tag 104 may be performed on the mechanism.

Next, the mechanism operation control unit 108 determines whether it is possible to read the second tag 104 and whether it is possible to record the information of the second tag 104 (S604). In a case where it is determined that the reading is possible and that it is possible to record the information, the process proceeds to S605. On the other hand, in a case where the reading is not possible or in a case where it is not possible to record the read information, the process proceeds to S700.

As shown in Fig. 7, S700 includes the following steps.

First, after S604 shown in Fig. 6, the mechanism operation control unit 108 displays, on the UI unit 110, the first error alarm indicating that the reading is not possible (S701), and the process proceeds to S702.

Thereafter, the mechanism operation control unit 108 executes the reading again after a fixed time elapses (S702). Then, it is determined whether it is possible to read the second tag 104 by the reading executed again and whether it is possible to record the information of the second tag 104 (S703). In a case where it is determined that the reading is possible and that it is possible to record the information, the process proceeds to S605. On the other hand, in a case where it is determined that the reading is not possible or that it is not possible to record the read information, the process proceeds to S704.

Next, the mechanism operation control unit 108 displays, on the UI unit 110, an alarm indicating that a reading state is abnormal (S704), ends the mode of reading the second tag 104 of the device (S705), and causes the process to proceed to S612.

Returning to Fig. 6, the mechanism operation control unit 108 determines whether the second tag 104 is information different from the cover tag 401 (S605).

In a case where it is determined that the second tag 104 is the same information as the cover tag 401 in S605, the mechanism operation control unit 108 displays, on the UI unit 110, an alarm indicating that the reading is not possible since the cover 402 is in an attached state (S606). Depending on the case, the setting is changed to the setting for reading the first tag (S607) and the process returns to S601. In addition, the setting for the reader 106 may not be changed, and a preparation mechanism operation for reading the first tag 101 may be performed on the mechanism.

On the other hand, in a case where it is determined that the second tag 104 is information different from the cover tag 401 in S605, the mechanism operation control unit 108 records the information of the second tag 104 in the storage device 132 (S608), displays the recorded information on the UI unit 110 (S609), and causes the process to proceed to S610.

Next, the mechanism operation control unit 108 determines whether a plurality of second tags 104 are to be registered (S610). In a case where it is determined that the reading is continuously performed, the process returns to S604. In a case where it is determined it is not necessary to continuously perform the reading, the process proceeds to S611 and the mode of reading the second tag from the UI unit 110 or the like is ended (S611).

The user closes the cover 402 opened in S601 and located at the second tag reading position (S612). In this case, in order to check whether the cover 402 is attached as it was before, the mechanism operation control unit 108 determines whether it is possible to read the cover tag 401 (S613). In a case where it is determined that the reading is not possible, the mechanism operation control unit 108 displays, on the UI unit 110, an alarm indicating that the reading is not possible since the cover 402 is not in the attached state (S614), and causes the process to proceed to S612.

On the other hand, in a case where it is determined that the reading is possible in S613, the mechanism operation control unit 108 changes the setting to the setting for reading the first tag in some cases, and ends the process (S615). The setting for the reader 106 in S615 may not be changed, and the preparation mechanism operation for reading the first tag may be performed on the mechanism.

Next, effects of the present embodiment will be described.

The above-described automatic analyzer 1 includes the sample disk 114 that holds the sample container 102 having the outer wall to which the first tag 101 storing the information about the liquid to be housed is attached, the holding area 103A that is located in the sample disk 114 and in which the sample container 102 to which the first tag 101 is attached is set, the area 105A in which the second tag 104 storing the information about the automatic analyzer 1 is installed, the holding area 103A and the area 105A are included in the reading range 111, and the reader 106 fixed so as to be capable of reading the information stored in the first tag 101 and the second tag 104.

According to the present embodiment, even in a case where a plurality of objects to be read are arranged at different reading positions, an angle of field at the time of reading is divided, the objects can be simultaneously read, a mounting area as the automatic analyzer 1 can be reduced compared to conventional techniques, and the device can be downsized.

In addition, since at least one of the holding area 103A and the area 105A in the reading range 111 can be directly optically read, a plurality of first optical path branching units 107 or the like do not need to be disposed and the number of components can be reduced.

Further, since the first optical path branching unit 107 is further provided between the reader 106 and the holding area 103A or the area 105A in the reading range 111, it is possible to increase the degree of freedom of the setting positions of the holding area 103A and the area 105A, and some constraints on the device layout can be relaxed.

In addition, a detection setting for reading by the reader 106 can be changed between the first tag information reading mode of reading the information of the first tag 101 and the second tag information reading mode of reading the information of the second tag 104. Therefore, in a single reader 106, a setting suitable for reading the first tag 101 and a setting suitable for reading the second tag 104 can be set, and the information reading of any tags can be executed with high accuracy.

### Second Embodiment

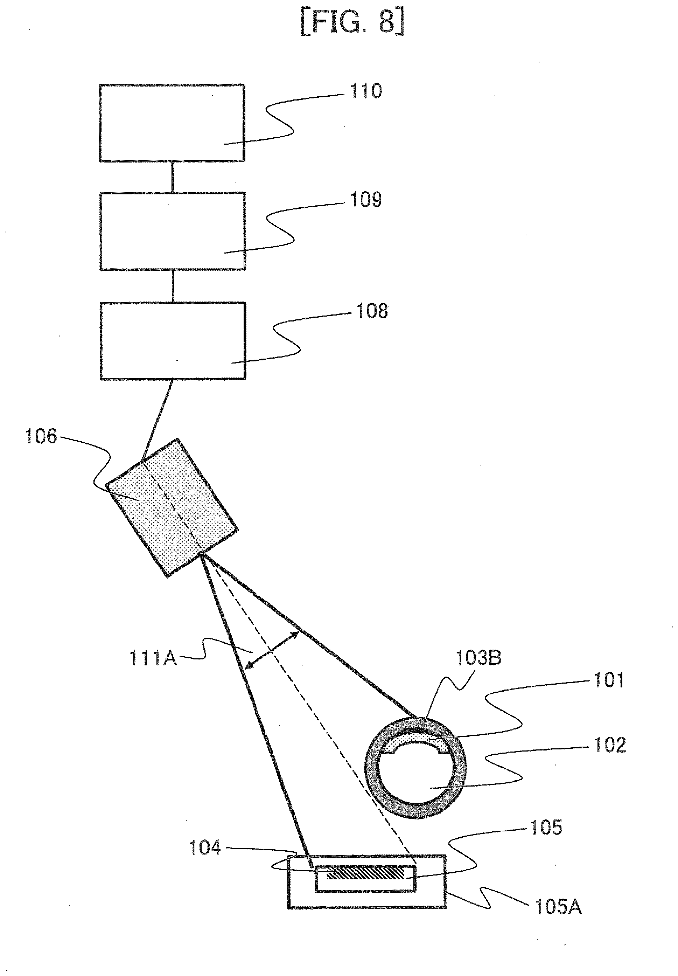

An automatic analyzer and an information reading method by the automatic analyzer in a second embodiment will be described with reference to Fig. 8. Fig. 8 is a view schematically showing a code reading unit in the automatic analyzer having a configuration according to the second embodiment.

In the present embodiment, a first optical path branching unit 107 is not provided in a reading range 111A, and each of a holding area 103B and an area 105A can be optically directly read.

Other configurations and operations are substantially the same as the configurations, the operations, and the effects in the automatic analyzer and the information reading method by the automatic analyzer in the above-mentioned first embodiment, and details are omitted.

### Third Embodiment

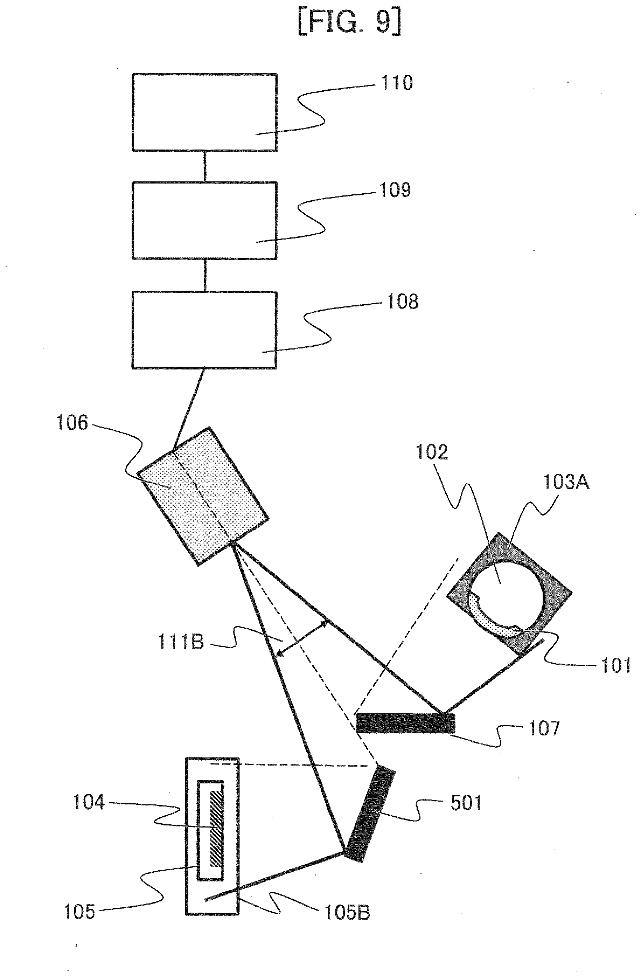

An automatic analyzer and an information reading method by the automatic analyzer in a third embodiment will be described with reference to Fig. 9. Fig. 9 is a view schematically showing a code reading unit in the automatic analyzer having a configuration according to the second embodiment.

The present embodiment is an embodiment in which, in a reading range 111B, a first optical path branching unit 107 such as a mirror is provided between a reader 106 and a holding area 103A, and a second optical path branching unit 501 such as a mirror is provided between the reader 106 and an area 105B in which a second tag 104 is located.

Other configurations and operations are substantially the same as the configurations, the operations, and the effects in the automatic analyzer and the information reading method by the automatic analyzer in the above-mentioned first embodiment, and details are omitted.

### Fourth Embodiment

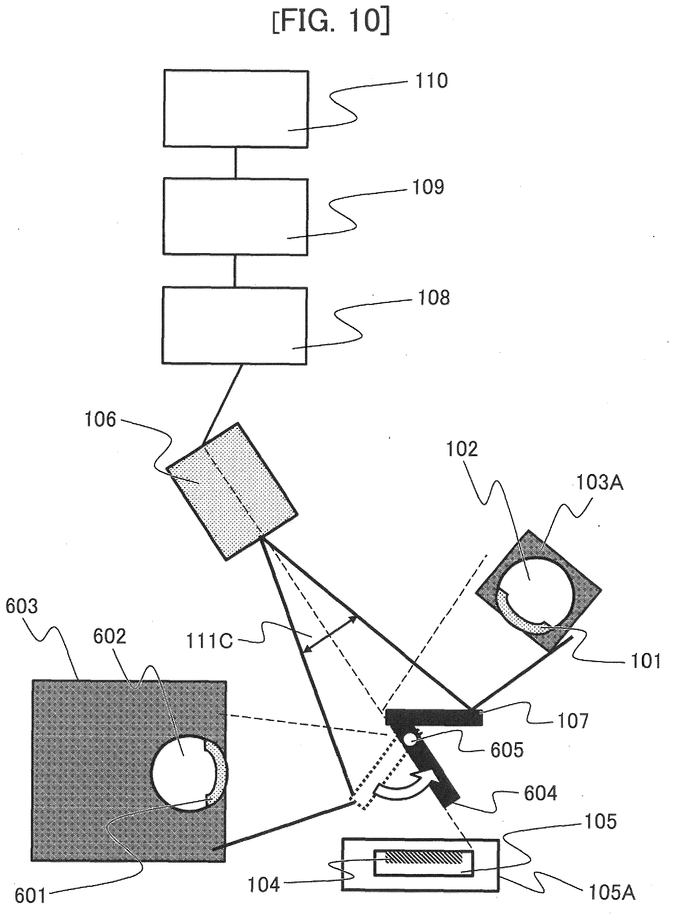

An automatic analyzer and an information reading method by the automatic analyzer in a fourth embodiment will be described with reference to Fig. 10. Fig. 10 is a view schematically showing a code reading unit in the automatic analyzer having a configuration according to the fourth embodiment.

In the present embodiment, a second holding area 603 in which a housing container 602 that has, attached thereto, a third tag 601 storing information about the automatic analyzer 1 and is substantially similar to the sample container 102 is set. In addition, a reading range 111C is fixed so as to include a holding area 103A, an area 105A, and a second holding area 603, and a third optical path branching unit 604 is disposed in the reading range 111C in addition to a first optical path branching unit 107 such as a mirror.

Further, the third optical path branching unit 604 is connected to a driving unit 605 that moves the position of the third optical path branching unit 604. The reading range 111C changes such that any of the area 105A and the second holding area 603 is included in the reading range 111C. The second tag 104 located in the area 105A can be optically directly detected without the intermediary of the third optical path branching unit 604, and the third tag 601 located at the second holding area 603 can be detected via the third optical path branching unit 604.

Note that a method of moving the third optical path branching unit 604 is not limited to rotation shown in Fig. 10, and the third optical path branching unit 604 may vertically and horizontally move.

Other configurations and operations are substantially the same as the configurations, the operations, and the effects in the automatic analyzer and the information reading method by the automatic analyzer in the first embodiment, and details are omitted.

In addition, the driving unit 605 that moves the position of the third optical path branching unit 604, and the second holding area 603 in which the third tag 601 storing the information about the automatic analyzer 1 are further provided. The reading range is fixed so as to include the holding area 103A, the area 105A, and the second holding area 603. Any one or more of the holding area 103A, the area 105A, and the second holding area 603 are included in the reading range 111C by the third optical path branching unit 604 whose position is moved by the driving unit 605. Thus, more positions where tags are read can be provided and the reading of various types of information can be implemented by the single reader 106.

### Others

The present invention is not limited to each embodiment, and may include various other applications and modifications without departing from the gist of the present invention as set forth in the claims.

For example, the reader 106 may be configured not only by an image reading method but also by another optical reading method such as a laser, or by a reader capable of reading a semiconductor storage medium, a magnetic storage medium, an optical storage medium, and the like. These reading methods may be combined. In addition, the first optical path branching unit 107, the second optical path branching unit 501, and the third optical path branching unit 604 may be constituted by half mirrors or prisms.

Further, the division of the reading area can be freely set, and the reading area may be divided into two or more sections.

Further, in the above-described embodiments, the process performed by the user at the time of reading the second tag may be automatically performed by the device.

Further, in each of the above-described embodiments, the automatic analyzer may be configured by combining at least two of a plurality of detecting units and mechanisms.

Further, the configurations described above in the embodiments can be applied to a clinical examination device other than the automatic analyzers.

### List of Reference Signs

- 1:: automatic analyzer
- 101:: first tag
- 102:: sample container
- 103A, 103B:: holding area (first tag setting position)
- 104:: second tag
- 105:: object
- 105A, 105B:: area (second tag setting position)
- 106:: reader
- 107:: first optical path branching unit
- 108:: mechanism operation control unit
- 109:: analytical operation control unit
- 110:: UI unit
- 111, 111A, 111B, 111C:: reading range
- 113:: sensor
- 114:: sample disk (sample holding unit)
- 115:: sample dispensing mechanism
- 116:: reagent storage
- 117:: reagent disk

- 118:: reagent pack holding unit
- 119:: reagent dispensing mechanism
- 120:: reaction bath
- 121:: biochemistry detecting unit
- 130:: control unit
- 132:: storing device
- 301:: image area
- 302:: setting
- 401:: cover identification tag
- 402:: cover
- 501:: second optical path branching unit
- 601:: third tag
- 602:: housing container
- 603:: second holding area (third tag setting position)
- 604:: third optical path branching unit
- 605:: driving unit

## Claims

1. An automatic analyzer comprising:
a container holding unit that holds a container with a first tag of storing information about liquid to be housed attached to the outer wall thereof;
a first tag setting position located within the container holding unit for setting the container with the first tag attached there;
a second tag setting position for setting a second tag of storing information about the automatic analyzer; and
a reader whose reading range includes the first tag setting position and the second tag setting position, which is fixed in a way possible to read the information stored in the first tag and the second tag.

2. The automatic analyzer according to claim 1, in which
in the reading range, at least one of the first tag setting position and the second tag setting position is formed to be optically and directly read.

3. The automatic analyzer according to claim 2, further comprising
an optical path branching unit that is arranged at least at one location of between the reader and the first tag setting position and between the reader and the second tag setting position.

4. The automatic analyzer according to claim 3, further comprising:
a driving unit that drives a position of the optical path branching unit; and
a third tag setting position for setting a third tag of storing information about the automatic analyzer, in which
the reading range is fixed to include the first tag setting position, the second tag setting position, and the third tag setting position, and
one or more of the first tag setting position, the second tag setting position, and the third tag setting position is included in the reading range by the optical path branching unit moved by the driving unit.

5. The automatic analyzer according to claim 1, in which
the reader is designed to be able to change reading detection setting between a first tag information reading mode of reading the information of the first tag and a second tag information reading mode of reading the information of the second tag.

6. The automatic analyzer according to claim 1, in which
the information about the automatic analyzer is the information about parts or numerical values of the automatic analyzer.

7. The automatic analyzer according to claim 1, in which
the liquid is a sample or a reagent.

8. The automatic analyzer according to claim 7, in which
the liquid is the sample,
the container is a sample container that holds the sample, and
the container holding unit is a sample holding unit that holds a plurality of the sample containers.

9. A method of reading information stored in a first tag and a second tag, by an automatic analyzer including a first tag setting position where to set a container held within a container holding unit which holds the container with the first tag of storing information about a liquid to be housed attached to the outer wall thereof and a second tag setting position where to set the second tag of storing information about the automatic analyzer,
the automatic analyzer in which the information stored in the first tag and the second tag is read by a reader having its reading range fixed, without moving the reader.
